# EUROPÄISCHE PATENTSCHRIFT

(11) **EP 3 091 624 B1**
(45) Veröffentlichungstag und Bekanntmachung des Hinweises auf die Patenterteilung: **26.06.2019**
(21) Anmeldenummer: 16160013.5
(22) Anmeldetag: 11.03.2016
(51) Int. Cl.: H02G 3/08, H02G 3/12

(54) **INSTALLATIONSDOSE FÜR ELEKTRISCHE GERÄTE**
INSTALLATION SOCKET FOR ELECTRIC APPLIANCES
BOITIER D'INSTALLATION POUR APPAREILS ELECTRIQUES

(30) Priorität: 13.04.2015 DE 202015101801 U
(43) Veröffentlichungstag der Anmeldung: 09.11.2016
(73) Patentinhaber: Kaiser GmbH & Co. KG, 58579 Schalksmühle (DE); Agro AG, 5502 Hunzenschwil (CH)
(72) Erfinder: VIOLA, Marc, 58339 Breckerfeld (DE)
(74) Vertreter: Rentsch Partner AG

(56) Entgegenhaltungen:
- EP-A1- 2 824 784
- DE-U- 1 837 975
- FR-A1- 2 859 320
- GB-A- 2 378 325
- US-A- 3 690 501

## Beschreibung

### TECHNISCHES GEBIET

Die Erfindung betrifft eine Dose für die Installation von elektrischen Geräten insbesondere in Hohlwänden.

### STAND DER TECHNIK

Abhängig von ihrem Anwendungsbereich müssen Installationsdosen eine Vielzahl von Anforderungen erfüllen. Einerseits sollen sie über ein ausreichendes Innenvolumen verfügen, um elektrische oder elektronische Geräte aufnehmen zu können. Andererseits verfügen Installationsdosen meist auch über standardisierte Schnittstellen, die eine einfache und sichere Befestigung der darin angeordneten Geräte und einen einfachen Anschluss von Leerrohren ermöglichen. Des Weiteren sollen solche Installationsdosen etwa in Hohlwände eingebrachte Öffnungen weitgehend luftdicht verschliessen, so dass ein Luftaustausch zwischen der Innenseite und der Aussenseite einer solchen Wand verhindert wird.

Werden Installationsdosen im Bereich gedämmter Hohlwände oder -decken verwendet, so müssen sie zudem auch noch über eine ausreichende Formstabilität verfügen, um selbst unter vom angrenzenden Dämmmaterial ausgeübten mechanischen Druck formstabil zu bleiben.

Aus dem Stand der Technik ist eine Vielzahl von Installationsdosen bekannt, wovon einige auch in ihrer Form vor oder während der Installation verändert werden können.

DE102006019167 B3 wurde am 29.11.2007 im Namen der Kaiser GmbH & Co. KG eingereicht und zeigt einen Hohlkörper für den Betonbau. Dieser soll insbesondere elektrische Einrichtungen und Installationen, wie Leuchten, Dosen oder Klemmen aufnehmen. Der gezeigte Hohlkörper weist einen im Wesentlichen zylinderförmigen Mittelteil auf, an dem seitlich über einen Anschlussstutzen ein sogenannter Tunnel angeschlossen werden kann. Dieser bewirkt eine Vergrösserung des Einbauraums des Hohlkörpers und soll so etwa einen Transformator für eine im Mittelteil eingebrachte Leuchte aufnehmen. Wie im Betonbau üblich, soll der in der DE102006019167 B3 gezeigte Hohlkörper vor dem Einbringen des Betons zwischen Schalungen positioniert und anschliessend vom Beton umgossen werden. Der gezeigte Hohlkörper ist deshalb so ausgebildet, dass er sich während dem Eingiessen des Betons sowie dem anschliessenden Verdichten und Aushärten desselben nicht deformieren kann.

DE202012005863 U1 wurde am 30.08.2012 im Namen der Kaiser GmbH & Co. KG veröffentlicht und zeigt eine Installationsdose aus Kunststoff für elektrotechnische Installationen. Die gezeigte Installationsdose findet insbesondere Verwendung als Unterputzdose. Sie weist einen Dosenkörper und ein für die jeweilige Anwendung passendes darauf aufbringbares sogenanntes Individualteil auf. Die Wandung der Installationsdose ist als Zweikomponenten-Element mit einer harten Kunststoffkomponente und einer weichen Kunststoffkomponente ausgestaltet. Die harte Kunststoffkomponente dient dabei als die eigentliche mechanische Trägerstruktur, in welche Öffnungen, Durchbrüche, Anschlussteile, Stecktunnel und dergleichen eingebracht sind. Die weiche Kunststoffkomponente verschliesst diese genannten Arten von Öffnungen und soll bei Bedarf - etwa zum Anschluss eines Kabels oder eines Leerrohrs - relativ einfach durchstossen werden können.

US3690501 wurde am 12.09.1972 im Namen der Ware Fuse Corporation veröffentlicht und zeigt eine Installationsdose für elektrische Komponenten. Die gezeigte Installationsdose umfasst eine rechteckige Hauptdose, die so dimensioniert ist, dass sie in entsprechende Standardöffnungen von Platten (Panels) eingebracht werden können. Die offenbarten Installationsdosen verfügen über eine oder mehrere seitliche Öffnungen, welche im Lichtraumprofil rechteckig ausgestaltet sind und in welche bei Bedarf zusätzliche Dosen vom Innern der Hauptdose her eingeschoben und anschliessend teleskopartig seitlich ausgefahren werden können. Die zusätzlichen Dosen können dazu umlaufende Kragen aufweisen, welche den Grad des seitlichen Ausfahrens begrenzen und zudem auch eine gewisse Abdichtung ermöglichen, so dass beispielsweise bei Funkenschlag keine Funken zwischen der Hauptdose und der zusätzlichen Dose hindurchgehen können. Von der Geometrie her sind die zusätzlichen Dosen auf rechteckige Querschnitte begrenzt. Der Querschnitt der Hauptdose muss grösser ausgestaltet sein als der Querschnitt der zusätzlichen Dose ansonsten das Teleskopieren nicht möglich wäre.

FR2859320 A1 wurde am 04.03.2005 im Namen der LEGRAND SA und der LEGRAND SNC veröffentlicht und zeigt eine Installationsdose für elektrische Geräte. Die gezeigte Installationsdose hat eine im Wesentlichen zylindrische Form, bestehend aus mehreren Abschnitten unterschiedlicher Durchmesser, die sich in Richtung der Längsachse des Hohlraumes teleskopartig ineinanderschieben lassen, so dass die Dosenhöhe veränderbar ist. Diese Abschnitte sind in Umfangsrichtung entlang der Umfangswand abwechselnd mit flexiblen Laschen und starren Verbindungen miteinander verbunden. Um die Installationsbox auch in Wandöffnungen mit geringerer Tiefe einbringen zu können, kann eine solche Installationsbox in axialer Richtung komprimiert werden, wofür die starren Abschnitte gebrochen und die von diesen verbundenen Abschnitte teleskopartig ineinandergeschoben werden können. Die flexiblen Laschen dienen dabei zur Begrenzung dieses Ineinanderschiebens.

EP1670112 A1 wurde am 14.06.2006 im Namen der ABB B.V. veröffentlicht und zeigt eine Elektro-Einbaudose. Um die Tiefe der Dose beispielsweise an die Tiefe einer in eine Wand eingebrachte Öffnung anpassen zu können, sind ihre Umfangswand und ihre Bodenwand so durch einen verformbaren Abschnitt miteinander verbunden, dass die Bodenwand von einer ersten stabilen Position in wenigstens eine zweite stabile Position gebracht werden kann, wobei die beiden Positionen unterschiedlichen Dosentiefen entsprechen. Dadurch kann ein Typ einer solchen Elektro-Einbaudose für verschiedene Arten von Öffnungen verwendet und so deren Variantenvielfalt reduziert werden.

EP2824784 A1 wurde am 14.01.2015 im Namen der F-Tronic Winfried Fohs GmbH veröffentlicht und zeigt eine Installationsdose. Diese soll der Aufnahme von elektrotechnischen und elektronischen Bauelementen bei Hohlwandinstallationen dienen. Die offenbarte Installationsdose verfügt über eine im Querschnitt runde Hauptdose und einen seitlich von dieser abstehenden Aufnahmeraum, der einen rechteckigen Querschnitt aufweist. Der Aufnahmeraum ist starr an der Seitenwand der Hauptdose angeformt und bildet mit dieser ein L-förmiges starres Gebilde. Damit die Dose in eine Öffnung einer Hohlwand eingelassen werden kann, weist die Dose im "Fersenbereich" eine deformierbare Zone aus Weichkunststoff auf, welche nach innen gedrückt werden kann. Ein Nachteil der Installationsdose besteht darin, dass der Aufnahmeraum von der Grösse her beschränkt ist und von der Dimension des Dosenhauptkörpers, bzw. deren Querschnitt abhängt. Bei der Montage in einer Hohlwand muss die Installationsdose seitlich abgekippt werden, damit der Aufnahmeraum eingeführt werden kann. Ein Nachteil besteht darin, dass ihr maximales Innenvolumen, die mögliche äussere Formgebung des Dosenkörpers, sowie auch die des Aufnahmeraums stark durch das notwendige Abkippen bei der Einführung beschränkt sind.

Das Dokument GB 2 378 325 A offenbart eine Bodenauslassdose, welche für die Aufnahme von überschüssigen Kabellängen einen vom Bodenkasten schräg seitlich abgehenden Beutel aus Gewebe umfasst.

### DARSTELLUNG DER ERFINDUNG

Aus unterschiedlichen Gründen kann es notwendig sein, Installationsdosen durch relativ kleine Öffnungen in Hohlwände oder -decken einbringen zu können. Dies ist etwa häufig der Fall bei Beleuchtungselementen, die in bestehenden Hohlwänden oder -decken versenkt montiert werden sollen, da grössere Öffnungen die ästhetische Erscheinung dieser Elemente negativ beeinträchtigen würden. Ein weiteres Bedürfnis besteht nach Installationsdosen mit Aufnahmeräumen, welche grösser als die Öffnungen sind, durch welche hindurch sie montiert werden.

Da viele der heute gebräuchlichen Beleuchtungselemente jedoch neben dem eigentlichen Leuchtmittel auch weitere Komponenten umfassen - so etwa Transformatoren, Steuerungen, Kühlrippen, etc. - müssen Installationsdosen in vielen Fällen gleichzeitig auch ein relativ grosses Innenvolumen zur Aufnahme dieser Komponenten zur Verfügung stellen. Die zur Verfügung stehende maximale Tiefe solcher Installationsdosen wird dabei jedoch häufig durch die geringe Tiefe des Hohlraums in der Wand (bzw. Decke) und/oder durch das in diesem vorhandene Dämmmaterial erheblich begrenzt. Als Folge davon kann eine wesentliche Vergrösserung des Innenvolumens einer Installationsdose in vielen Fällen nur durch eine Ausdehnung dieser senkrecht zur Tiefenrichtung erfolgen, was jedoch bei den aus dem Stand der Technik bekannten Vorrichtungen auf unlösbare Probleme stösst.

Eine Aufgabe besteht deshalb darin, eine Installationsdose zur Verfügung zu stellen, die ein relativ grosses Innenvolumen zur Aufnahme von bspw. elektrischen oder elektronischen Geräten aufweist und auch dennoch durch relativ kleine Öffnungen in Hohlwände oder -decken eingeführt werden kann. Eine weitere Aufgabe der vorliegenden Erfindung besteht darin, eine Installationsdose zur Verfügung zu stellen, die eine sichere Abdichtung zwischen der Vorderseite und der Hinterseite eine Wand oder Decke ermöglicht. Eine weitere Aufgabe der vorliegenden Erfindung besteht darin, eine Installationsdose zur Verfügung zu stellen, die in montiertem Zustand weitgehend dimensionsstabil ist. Eine weitere Aufgabe der vorliegenden Erfindung besteht darin, eine Installationsdose zur Verfügung zu stellen, die kostengünstig hergestellt werden kann.

Die vorstehende Aufgabe wird durch eine Installationsdose gemäss Anspruch 1 gelöst.

Eine erfindungsgemässe Installationsdose umfasst in der Regel einen Dosenhauptkörper, welcher einen über eine Öffnung (Montageöffnung) zugänglichen ersten Installationsraum umgibt, sowie mindestens einen von diesem seitlich abstehenden Dosennebenkörper, welcher einen mit dem ersten Installationsraum wirkverbundenen zweiten Installationsraum umgibt. Der mindestens eine Dosennebenkörper ist normalerweise in einem Winkel von 90° zu einer Hauptachse (Längsachse, in der Regel senkrecht zur Installationsöffnung) des Dosenhauptkörpers angeordnet. Je nach Anwendungsgebiet sind auch andere Winkel denkbar. Die Öffnung ist in der Regel einem Dosenboden gegenüber angeordnet. Je nach Anwendungsgebiet ist der Dosenboden eben und/oder gekrümmt ausgestaltet. Abhängig vom Anwendungsgebiet sind andere Geometrien möglich. Der mindestens eine Dosennebenkörper ist in der Regel zumindest bereichsweise deformierbar ausgestaltet, derart, dass dieser bei der Montage oder zur Platzverringerung während des Transportes temporär ins Innere des ersten Installationsraumes des Dosenhauptkörpers umgestülpt werden kann. In der umgestülpten Position steht dieser mit Vorteil nicht mehr (oder nur unerheblich) über eine Aussenkontur des Dosenhauptkörpers vor, so dass die Installationsdose einfach durch eine Öffnung hindurch montiert werden kann.

Bei der Montage wird die Installationsdose mit nach innen umgestülptem zweitem Installationsraum in ein Loch einer Wand eingefahren. Danach wird der zweite Installationsraum wieder nach aussen (rück-)umgestülpt.

Der mindestens eine Dosennebenkörper ist zumindest bereichsweise aus weichelastischem Kunststoff hergestellt ist. Der Dosennebenkörper kann aber zumindest einen Bereich aus starrem Kunststoff aufweisen. Dieser Bereich kann die Eigenstabilität des Dosennebenkörpers unterstützen. Gute Resultate können erzielt werden, wenn der zumindest eine Bereich aus starrem Kunststoff eine rippenförmige Ausgestaltung aufweist. Je nach Grösse und Anordnung können auch mehrere Rippen ausgebildet sein, welche sich gegenseitig in ihrer Funktion unterstützten.

Der erste und der zweite Installationsraum können bei Bedarf über ein Schott voneinander abtrennbar sein. Beim Schott kann es sich z.B. um ein am Dosenhauptkörper und/oder Dosennebenkörper befestigtes, bzw. mit einem und/oder beiden wirkverbindbares, flächiges Trennelement handeln, welches bei Bedarf auch nachträglich eingebaut, bzw. entfernt werden kann.

Der Dosennebenkörper kann bei Bedarf an einer nach vorne gerichtete Aussenwand eine oder mehrere zur Dosenvorderseite gerichtete Abstützung (z.B. einen Fuss) aufweisen, welche beim Rückstülpen zum Befestigen, bzw. Festklemmen der Dose an einer Wand dient. Je nach Anwendungsgebiet kann die Installationsdose mehr als einen Dosennebenkörper aufweisen. Die Dosennebenkörper können unterschiedlich ausgestaltet sein, bzw. unterschiedliche grosse Installationsräume aufweisen. Der Dosenhauptkörper und der Dosennebenkörper können als separate Teile ausgestaltet sein, welche trennbar und/oder untrennbar miteinander wirkverbunden sind. Der Dosenhauptkörper und der Dosennebenkörper können z.B. über eine Schnappverbindung miteinander wirkverbunden sein. In einer Ausführungsvariante weist der Dosenhauptkörper im Bereich seiner Aussenwand zumindest einen ebenen Bereich auf, welcher in einem Winkel von 30° bis 60° zur Hauptachse des Dosenhauptkörpers angeordnet ist. Der Dosenhauptkörper besteht normalerweise zumindest bereichsweise aus einem starren Kunststoff. Je nach Anwendungsgebiet kann der Dosenhauptkörper alternativ oder in Ergänzung aus flexiblem Kunststoff bestehen und z.B. ein Gerüst aus starrem Kunststoff aufweisen. Der Dosenhauptkörper kann eine oder mehrere gleiche oder unterschiedlich grosse Öffnungen aufweisen, welche je durch eine heraustrennbare Membran aus weichelastischem Kunststoff verschlossen sind. Alternativ oder in Ergänzung kann die Öffnung durch einen Verschluss verschlossen sein. In der Öffnung und/oder neben dieser kann eine Dichtung aus weichelastischem Material vorgesehen sein. Die mindestens eine Öffnung kann als Rohreinführung dienen. Die mindestens eine Öffnung kann Befestigungsmittel für ein Installationsrohr aufweisen. In einer Variante weist der Dosenhauptkörper eine zumindest bereichsweise zylindrische, bzw. konische Innenwand auf, welche sich von der Öffnung zu einem Boden hin verjüngt. In einer Variante weist der Dosennebenkörper einen im Wesentlichen rechteckigen Querschnitt auf. Auch hier sind je nach Anwendungsgebiet andere Ausgestaltungen möglich. Im Unterschied zum Stand der Technik ermöglicht die Erfindung eine sehr flexible Ausgestaltung des Dosennebenkörpers, bzw. dessen zweiten Installationsraum. Das Volumen des zweiten Installationsraumes kann z.B. im Bereich von 50% bis 150% des ersten Installationsraumes liegen. Bei Bedarf kann der Dosenhauptkörper Befestigungsmittel zur Befestigung der Installationsdose an einer Wand aufweisen. Z.B. kann der Dosenhauptkörper einen oder mehrere aus der Kontur des Dosenhauptkörpers ausschwenkbare Bügel oder elastische Bereiche aufweisen. Gute Resultate werden mit Bügel erzielt, welche mittels einer Verstellschraube aus der Kontur des Dosenhauptkörpers ausschwenkbar sind. Die Verstellschraube kann gleichzeitig als Befestigungsschraube dienen. Die Installationsdose kann mindestens ein Wirkverbindungsmittel aufweisen mittels dem sie mit einer weiteren Installationsdose wirkverbindbar ist. Das Wirkverbindungsmittel kann eine Verbindungsbuchse sein, welche zum Wirkverbinden von zwei Installationsdosen über ein Verbindungsrohr dient. Die Verbindungsbuchse kann bezüglich einer Hauptachse des Dosennebenkörpers versetzt und/oder in einem Winkel von +/- 90° gegenüber diesem angeordnet sein.

Je nach Anwendungsgebiet kann die Installationsdose einen ersten und einen zweiten Dosennebenkörper aufweisen, wobei der zweite (bezüglich dem Dosenhauptkörper) gegenüber dem ersten Dosennebenkörper oder in einem anderen Winkel zu diesem angeordnet ist. Zumindest einer der beiden Dosennebenkörper ist umstülpbar ausgestaltet.

Anhand der in den nachfolgenden Figuren gezeigten Ausführungsbeispiele und der dazugehörigen Beschreibung werden Aspekte der Erfindung näher erläutert. Es zeigen schematisch und vereinfacht:
- Fig. 1: eine erste Ausführungsvariante einer Installationsdose in einer Ansicht von unten;
- Fig. 2: die Installationsdose gemäss Figur 1 in einer Ansicht von oben;
- Fig. 3: die Installationsdose gemäss Figur 1 in einer Seitenansicht;
- Fig. 4: eine Schnittdarstellung durch die Installationsdose entlang der Schnittlinie DD gemäss Figur 2;
- Fig. 5: eine perspektivische Darstellung der Installationsdose gemäss Figur 1 von schräg oben und vorne;
- Fig. 6: eine perspektivische Darstellung der Installationsdose gemäss Figur 1 von schräg unten und hinten;
- Fig. 7: eine zweite Ausführungsvariante einer Installationsdose in einer Ansicht von unten;
- Fig. 8: die Installationsdose gemäss Figur 7 in einer Ansicht von oben;
- Fig. 9: die Installationsdose gemäss Figur 7 in einer Seitenansicht;
- Fig. 10: eine Schnittdarstellung durch die Installationsdose entlang der Schnittlinie EE gemäss Figur 8;
- Fig. 11: eine perspektivische Darstellung der Installationsdose gemäss Figur 7 von schräg oben und vorne;
- Fig. 12: eine perspektivische Darstellung der Installationsdose gemäss Figur 7 von schräg unten und hinten;
- Fig. 13: eine dritte Ausführungsvariante einer Installationsdose in einer Ansicht von unten;
- Fig. 14: die Installationsdose gemäss Figur 13 in einer Ansicht von oben;
- Fig. 15: die Installationsdose gemäss Figur 13 in einer Seitenansicht;
- Fig. 16: eine Schnittdarstellung durch die Installationsdose entlang der Schnittlinie FF gemäss Figur 14;
- Fig. 17: eine perspektivische Darstellung der Installationsdose gemäss Figur 13 von schräg oben und vorne;
- Fig. 18: eine perspektivische Darstellung der Installationsdose gemäss Figur 13 von schräg unten und hinten;
- Fig. 19: den Zusammenbau der ersten Variante gemäss den Figuren 1-6;
- Fig. 20: den Zusammenbau der zweiten Variante gemäss den Figuren 7-12;
- Fig. 21: die Montage einer Installationsdose in einer Wand;
- Fig. 22: eine Verbindung und Montage zweier Installationsdosen in einer Wand in einer perspektivischen Darstellung von schräg oben und vorne;
- Fig. 23: eine Draufsicht der Verbindung zweier Installationsdosen gemäss Figur 22;
- Fig. 24: eine Schnittdarstellung durch die verbundenen Installationsdosen entlang der Schnittlinie DD gemäss Figur 23;
- Fig. 25: eine vierte Ausführungsvariante einer Installationsdose in einer perspektivischen Darstellung von schräg oben und vorne;
- Fig. 26: eine fünfte Ausführungsvariante einer Installationsdose in einer perspektivischen Darstellung von schräg oben und vorne;
- Fig.27: eine sechste Ausführungsvariante einer Installationsdose in einer perspektivischen Darstellung von schräg oben und vorne;
- Fig.28: eine Seitenansicht einer Installationsdose gemäss Figur 27.

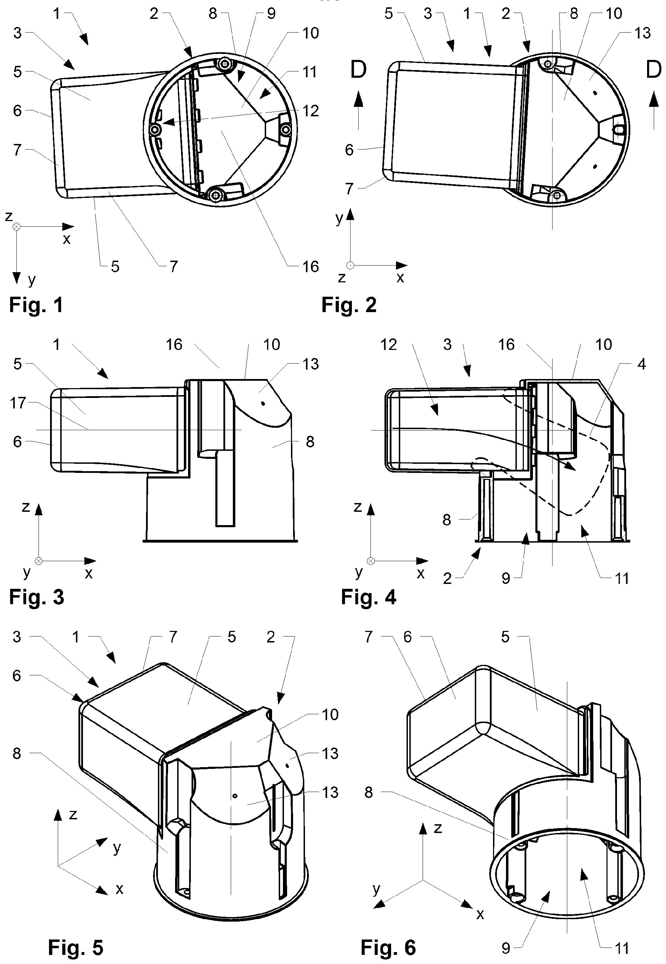

**Figur 1** zeigt eine erste Variante einer Installationsdose 1 von unten, **Figur 2** zeigt die Installationsdose 1 von oben. **Figur 3** zeigt die Installationsdose in einer Seitenansicht. **Figur 4** zeigt eine Schnittdarstellung durch die Installationsdose entlang der Schnittlinie DD gemäss **Figur 2. Figur 5** zeigt die Installationsdose in einer perspektivischen Darstellung von schräg oben und vorne. **Figur 6** zeigt die Installationsdose 1 in einer perspektivischen Darstellung von schräg unten und hinten.

Die Installationsdose 1 weist einen Dosenhauptkörper 2 auf, welcher in der gezeigten Variante im Wesentlichen zylindrisch, bzw. leicht konisch ausgestaltet ist. Der Querschnitt des Dosenhauptkörpers 2 ist hier im Wesentlichen rund ausgestaltet, kann aber auch andere Formen aufweisen, z.B. rechteckig, quadratisch, oder vieleckig. Am Dosenhauptkörper 2 schliesst ein Dosennebenkörper 3 an, welcher als Aufnahmeraum für ein oder mehrere unterschiedliche Geräte dienen kann, z.B. Transformator, Kühlelement, Steuerungselektronik, Klemmen, Kabel, usw..

Der Dosennebenkörper 3 ist in der gezeigten Variante sowohl in Längsrichtung als auch in Querrichtung im Wesentlichen rechteckig ausgestaltet. Er weist flache Seitenwände 5 und eine flache Rückwand 6 auf, welche über abgerundete Eckbereiche 7 einander übergehen und einen zweiten Installationsraum 12 umschliessen. Andere Ausgestaltungen mit anderen Querschnitten sind möglich.

Der Dosenhauptkörper 2 weist eine im Wesentlichen zylindrische Aussenwand 8 auf, welche am unteren Ende durch eine Öffnung 9 und am gegenüberliegenden oberen Ende durch einen Boden 10 begrenzt wird. Der Dosenhauptkörper 2 umschliesst einen ersten Installationsraum 11.

Der Dosenhauptkörper 2 ist mit Vorteil ganz oder teilweise aus einem ersten härteren, bzw. steiferen Material (Kunststoff) und der Dosennebenkörper 3 aus einem zweiten weicheren Material (Kunststoff) gefertigt, welche im Vergleich zum ersten Kunststoff gezielt deformierbar ist. Der zweite Kunststoff besteht mit Vorteil aus einem weichelastischen Kunststoff, welcher vergleichsweise grosse Deformationen zulässt ohne zu brechen. Der Dosennebenkörper 3 ist so ausgestaltet, dass er für die Montage, wie in der Schnittdarstellung gemäss **Figur 4** durch die Linie 4 schematisch angedeutet, in den ersten Installationsraum 11 des Dosenhauptkörpers 2 umgestülpt werden kann. Der Dosennebenkörper 3 ist dabei mit Vorteil so ausgestaltet, dass er im umgestülpten Zustand eine stabile Position erreicht, in welcher er zumindest während der Montage der Installationsdose 1 verbleibt, ohne zurück zu schnappen.

Sowohl die Seitenwände 5, als auch die Rückwand 6 des Dosennebenkörpers 3 bestehen aus dem zweiten weichen Kunststoff. Trotzdem weisen sie mit Vorteil eine gewisse Eigenstabilität, bzw. Tragfähigkeit auf, so dass sie im montierten Zustand zur Aufnahme und Halterung eines Gerätes oder einer Komponente dienen können. Bei Bedarf können die Seitenwände 5 und/oder die Rückwand 6 und/oder den Eckbereiche 7 des Dosennebenkörpers 3 Dünnstellen (nicht weiter dargestellt) aufweisen, welche eine Scharnierfunktion übernehmen und so ein gewünschtes Deformationsverhalten unterstützen können. Bei Bedarf können ein oder mehrere Bereiche des Dosennebenkörpers 3 aus einem härteren, bzw. steiferen Material gefertigt sein, welche zur Eigenstabilität beiträgt. Insbesondere im Übergangsbereich zwischen dem Dosennebenkörper 3 und dem Dosenhauptkörper 2 können Bereiche aus einem steiferen Material vorhanden sein, welche die Stabilität unterstützen. Diese Bereiche können ein integraler Bestandteil der Struktur oder als separate Elemente eingesetzt werden.

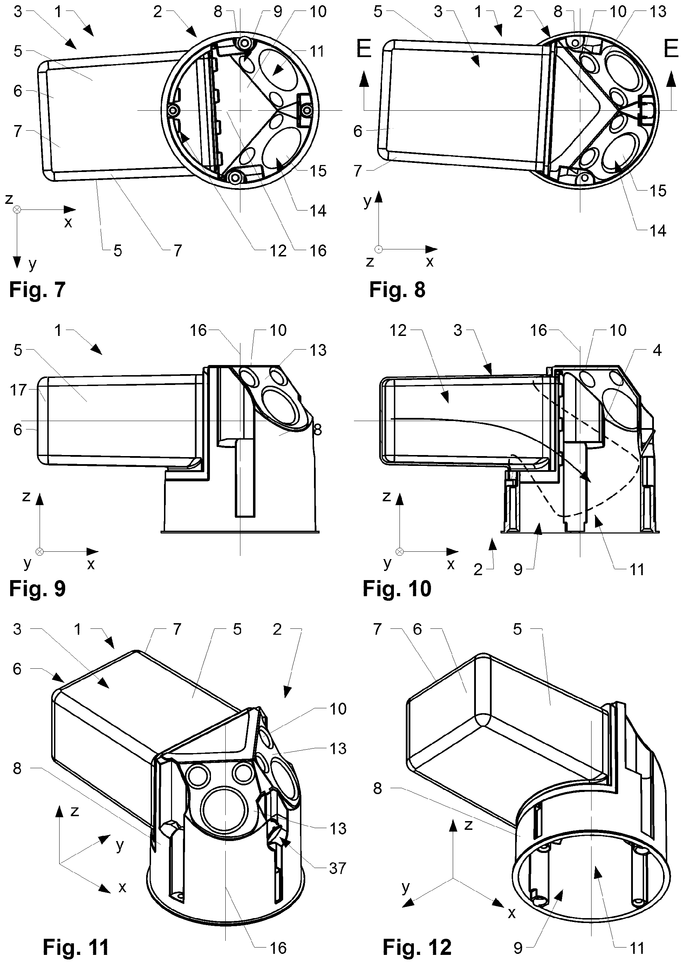

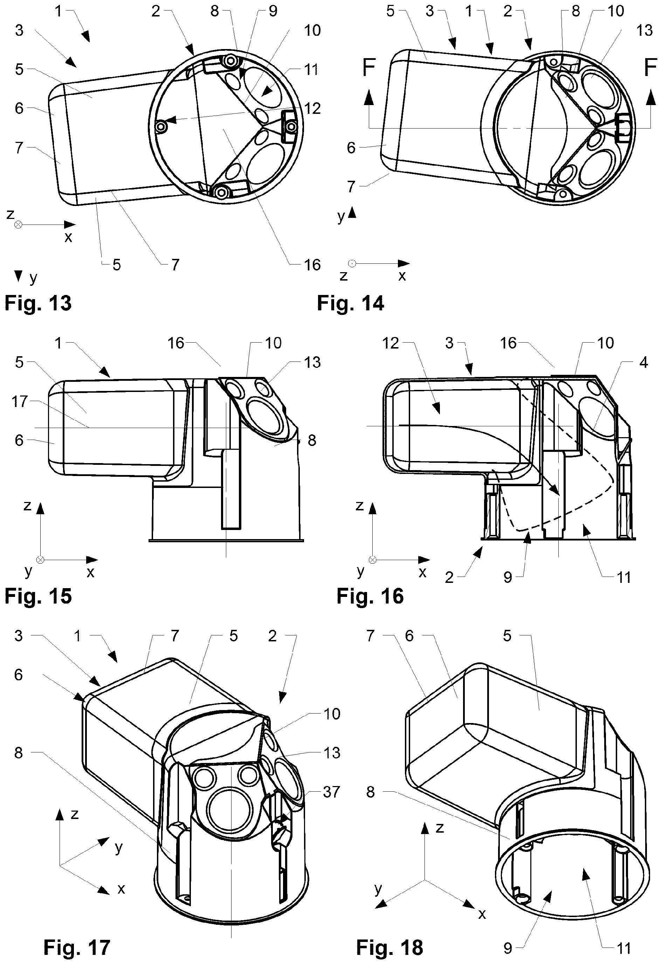

Wie zu erkennen ist, können z.B. im Übergangsbereich zwischen der Aussenwand 8 und dem Boden 10 ein oder mehrere Wandbereiche 13 schräg angeordnet sein. Die Wandbereiche 13 können je nach Ausführungsform und Anwendungsgebiet zwischen 30° bis 60° gegenüber einer Hauptachse 16 des Dosenhauptkörpers 2 geneigt sein. Wie in den Ausführungsformen gemäss den **Figuren 7-12** und **13-18** zu erkennen ist, können in diesen Bereichen ein oder mehrere Öffnungen 14 für Kabel, bzw. Kabelrohre angeordnet sein. Die Öffnungen 14 sind vor Gebrauch mit Vorteil einer Membran 15 oder einem Stopfen (nicht näher dargestellt) verschlossen, welche einfach entfernt, bzw. mit einem Messer oder einem anderen scharfen Gegenstand durchstochen werden können. Die Membranen 15 können gleichzeitig als Dichtung dienen. Die Membranen 15 bestehen mit Vorteil aus demselben weichelastischen Material wie der Dosennebenkörper 3. Sie sind jedoch im Vergleich in der Regel dünner ausgestaltet. Im Bereich der Öffnungen 14 können Befestigungsmittel für eines oder mehrere Kabelrohre (nicht näher dargestellt) angeordnet sein. Bei Bedarf kann die Aussenfläche des Dosenhauptkörpers 2 durch eine Schicht weichelastischen Kunststoff überzogen sein. Der Dosenhauptkörper kann zumindest bereichsweise aus einem Gerippe aus starrem Kunststoffe bestehen. Zwischen den Rippen sind Öffnungen angeordnet, welche mit Wänden aus weichelastischem Material verschlossen sind.

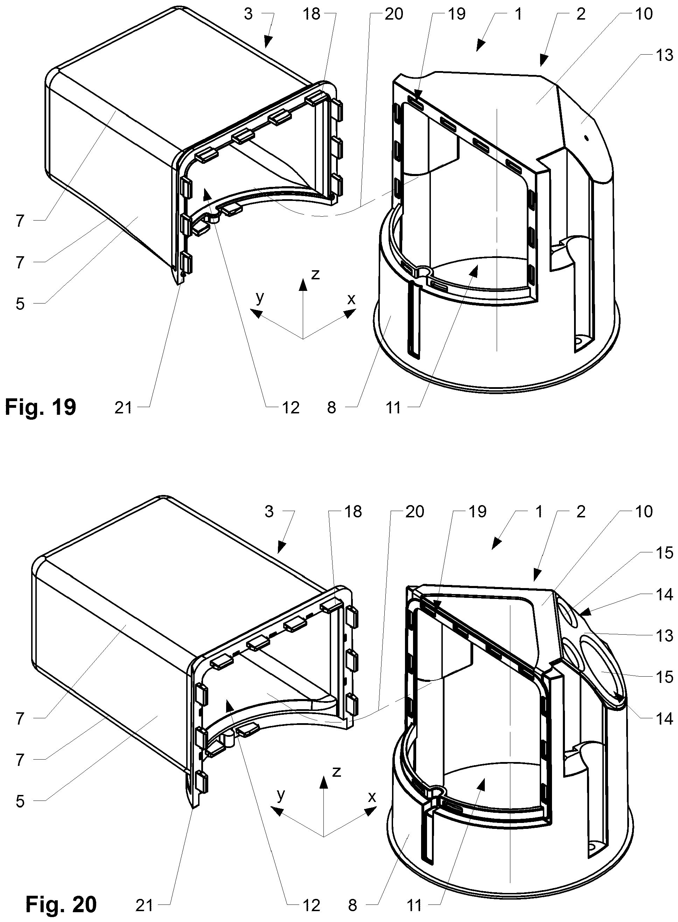

Die Installationsdose 1 wird mit Vorteil durch Spritzgiessen in einem oder mehreren Durchgängen hergestellt. Die Dose kann ein- oder mehrteilig ausgestaltet sein. Bei einem mehrteiligen Aufbau, wie in den **Figuren 19** und **20** gezeigt, werden die Teile z.B. durch Schraub- und/oder Schnappverbindungen miteinander wirkverbunden. Im vorliegenden Beispiel bestehen die Schnappverbindungen aus Schnapphacken 18 und Gegenöffnungen 19 in welche die Schnapphacken 18 lösbar oder unlösbar eingeschnappt werden können. Der Vorgang des Zusammenfügens, bzw. Einschnappens ist mittels einer Linie 20 schematisch dargestellt. Selbstverständlich können die Schnapphacken 18 und die Gegenöffnungen 19 anders angeordnet, bzw. anders ausgeformt sein. Beispielsweise kann eine andere Fügerichtung, z.B. in Richtung der angezeigten z-Achse gewählt werden. Andere, bzw. ergänzende Fügemöglichkeiten sind z.B. Kleben und/oder Schweissen und/oder Ultraschallschweissen. Bei Bedarf kann der Dosennebenkörper 3 einen umlaufenden Rahmen 21 aus starrem Kunststoff aufweisen, welcher an die Seitenwände 5 aus weichelastischem Material abschliesst. Der Rahmen 21 kann zur Versteifung und zum Anschliessen an den Dosenhauptkörper 2 dienen. Bei Bedarf kann zwischen dem Dosenhauptkörper 2 und den Dosennebenkörper 3 eine Dichtung angeordnet (nicht im Detail dargestellt).

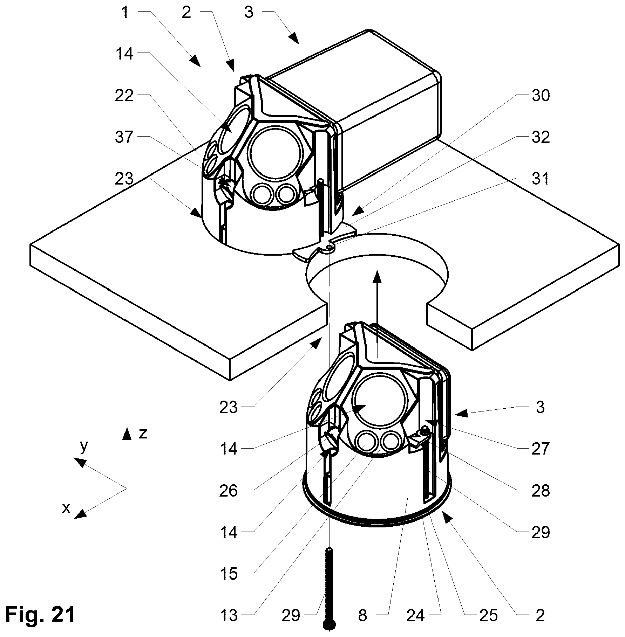

Die Montage von zwei erfindungsgemässen Installationsdosen 1 in einer Wand 22 ist in **Figur 21** schematisch gezeigt. Die Wand 22 ist teilweise geschnitten dargestellt, so dass das Einführen der Installationsdose 1 in ein dafür vorgesehenes Loch 23 besser ersichtlich sind. Bei der Installationsdose 1 auf der rechten Bildseite ist der eine Dosennebenkörper 3 ins Innere des Dosenhauptkörpers 2 umgestülpt und daher nur teilweise ersichtlich. Im umgestülpten Zustand steht der Dosennebenkörper 3 nicht oder nur sehr gering über die Kontur der Aussenwand 8 vor. Das Einführen der Installationsdose 1 in die Öffnung 23 wird damit nicht nachteilig behindert. Die Installationsdose 1 weist im Bereich des öffnungsseitigen Endes des Dosenhauptkörpers 2 einen Anschlag 24, welcher in der gezeigten Ausführungsform als radial vorstehender, umlaufender Rand 24 ausgebildet ist (andere Ausgestaltungen des Anschlages sind möglich). Die Installationsdose 1 kann bis zu diesem in das Loch 23 eingeschoben werden. Der Rand 24 verhindert, dass die Installationsdose 1 durch das Loch 23 hindurch fällt. Bei Bedarf kann im Bereich des Randes 24 eine Dichtung 25 vorgesehen werden, welche im montierten Zustand einen Spalt zwischen der Aussenwand 8 und dem Loch 23 abdichtet. Die Dichtung 25 kann als separates Teil ausgestaltet oder fest mit dem Dosenhauptkörper 2 wirkverbunden sein, z.B. durch Anspritzen.

Anschliessend wird der Dosennebenkörper 3 wieder nach aussen umgestülpt, so dass er seine normale Position erreicht. Der Dosennebenkörper 3 kommt hinter der Wand 22 zu liegen, wie in **Figur 21** in der linken Bildhälfte ersichtlich.

Zum vereinfachten Öffnen einer Kabeleinführungen 14, kann die Membran 15 eine Lasche 26 aufweisen, mittels welcher die Membran 15 durch herausreissen entfernt werden kann.

Zum Befestigen der Installationsdose 1 an der Wand 22 kann diese, wie in **Figur 21** gezeigt, einen oder mehrere in einer Nische 27 angeordnete nach Aussen schwenkbare Befestigungsbügel 28 aufweisen, welche je durch eine Schraube 29 gehalten werden, die von der Öffnung 9 des Dosenhauptkörpers 2 her bedient werden kann. Durch drehen der Schraube 29 kann der Befestigungsbügel 28 zuerst aus der Nische 27 ausgeschwenkt und danach mit Bezug auf den Dosenhauptkörper 2 in axialer Richtung (z-Richtung) verschoben werden, bis er auf der Rückseite der Wand 22 ansteht und damit die Installationsdose 1 gegenüber der Wand 22 fixiert. Alternativ oder in Ergänzung kann diese Dose direkt an der Wand 22 festgeschraubt werden. Weiterhin besteht die Möglichkeit zwei Dosen durch ein Zwischenstück 30 miteinander zu verbinden, sowie die beiden Dosen gleichzeitig gegenüber der Wand 22 zu befestigen. Insbesondere bei nahe zusammenstehenden Installationsdosen 1 weist dies eine verbesserte Stabilität auf. In der gezeigten Ausführungsvariante wird das Zwischenstück 30 anstelle der Befestigungsbügel 28 eingesetzt. Zur Befestigung können dieselben Schrauben 29 verwendet werden. Das Zwischenstück 30 weist hierzu zwei Schraubenlöcher 31, sowie gegenüber diesen seitlich abstehende Stützflügel 32 auf, welche zum Abstützen gegenüber der Wand 22 dienen können.

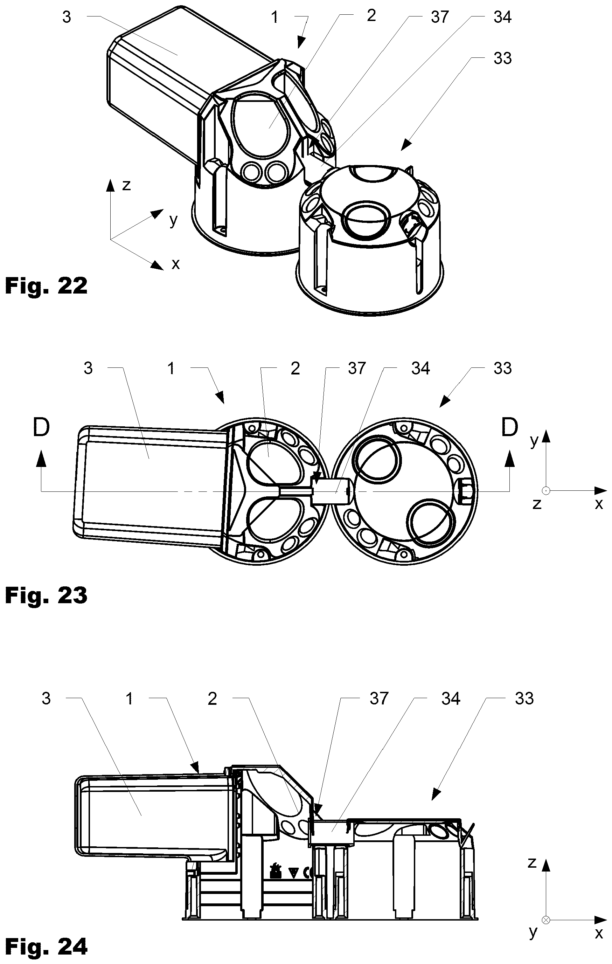

**Figur 22** zeigt die Verbindung einer ersten und einer zweiten Installationsdose 1, 33 mittels eines Verbindungsrohrs 34 in einer perspektivischen Darstellung von schräg oben und vorne. **Figur 23** zeigt die Installationsdosen 1, 33 von oben und **Figur 24** zeigt die Installationsdosen 1, 33 entlang der Schnittlinie DD gemäss **Figur 23**. Die erste Installationsdose 1 weist einen Dosenhauptkörper 2 und einen Dosennebenkörper 3 der oben beschriebenen Art auf. Die zweite Installationsdose 33 weist keinen Dosennebenkörper auf. Bei Bedarf können auch zwei Dosen 1 mit je einem Dosennebenkörper 3 miteinander wirkverbunden werden. Bei beiden Installationsdosen 1, 33 wurde mit Hilfe der Laschen 26 die entsprechend vorgesehenen Membranen 15 durch herausreissen entfernt um die beiden Dosen über ein Verbindungsrohr 34 zueinander zugänglich zu machen. Auf die Weise können die Installationen der beiden Installationsdosen 1, 33 miteinander elektrisch wirkverbunden werden. Weiterhin können die Membranen 15 dichtend ausgeführt sein und die beiden Installationsdosen 1, 33 somit derart verbinden, dass keine Luft und Schmutz durch die Verbindungsstellen in die Installationsräume 11,11 eindringt. Für eine Wirkverbindung zu einer weiteren Installationsdose 1, 33 mittels einem Verbindungsrohr 34 weist die erste Installationsdose 1 eine Verbindungsbuchse 37 (Rohreinführung) auf, welche bezüglich dem Dosenhauptkörper 2 dem Dosennebenkörper 3 gegenüberliegend angeordnet ist. Je nach Anwendungsgebiet kann die Verbindungsbuchse 37 bezüglich der Hauptachse 17 des Dosennebenkörpers 3 versetzt und/oder in einem Winkel von +/- 90° angeordnet sein.

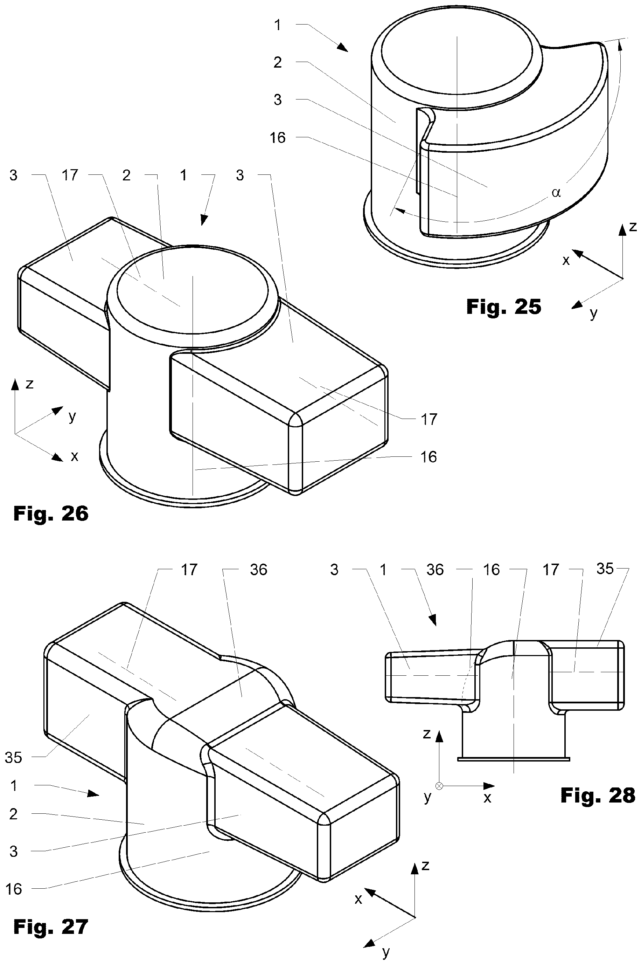

**Figur 25** zeigt eine perspektivische Ansicht einer weiteren Ausführungsform einer Installationsdose 1 mit einem Dosenhauptkörper 2 aus starren und/oder weichelastischen Material und einem umstülpbaren Dosennebenkörper 3 aus weichelastischem Material. In der gezeigten Ausführungsform ist der Dosennebenkörper 3 in einem ungefähren Winkel von 90° zu der Hauptachse 16 des Dosenhauptkörpers 2 angeordnet. Die von der z-Richtung aus betrachtete Kontur des Dosenhauptkörpers 2 weist dabei im Wesentlichen eine runde Form mit einem ersten Radius auf. Die Kontur des Dosennebenkörpers 3 erstreckt sich mit Bezug auf die Hauptachse 16 des Dosenhauptkörpers 2 über einen Winkel α von hier 120°. Bei Bedarf kann der Winkel α einen anderen Wert einnehmen. Die Aussenkontur kann, wie dargestellt rund sein, oder eine andere Form aufweisen. Andere Konturformen des Dosennebenkörpers 3 sind denkbar, wie beispielsweise ein Vieleck, so lange diese sich in den Dosenhauptkörper 2, wie oben beschrieben, hinein stülpen lassen. Ebenfalls kann der Dosennebenkörper 3 über den gesamten Umfang des Dosenhauptkörpers 2 von diesem abgehen, anstatt dass dieser nur über einen Teilumfang angebracht sein. Der Dosennebenkörper ist weiterhin zumindest bereichsweise deformierbar ausgestaltet, so dass dieser bei der Montage oder zur Platzverringerung während des Transportes temporär ins Innere des ersten Installationsraumes des Dosenhauptkörpers umgestülpt werden kann.

**Figur 26** zeigt eine Ausführungsform einer erfindungsgemässen Installationsdose 1 mit einem Dosenhauptkörper 2 und zwei Dosennebenkörpern 3 in einer perspektivischen Darstellung von schräg oben und vorne. Beide Dosennebenkörper 3 sind hier mit Vorteil aus einem weicheren Material gefertigt und somit umstülpbar, sodass beide Dosennebenkörper einzeln oder gemeinsam in den ersten Installationsraum 11 des Dosenhauptkörpers 2 umgestülpt sein können. Die Dosennebenkörper 3 sind dabei mit Vorteil so ausgestaltet, dass sie im umgestülpten Zustand eine stabile Position erreichen, in welcher sie zumindest während der Montage in der Installationsdose 1 verbleiben, ohne zurück zu schnappen.

Der zweite Dosennebenkörper 35 ist bezüglich dem Dosenhauptkörper (2), gegenüber (Winkel 180°) dem ersten Dosennebenkörper 3 angeordnet. Alternativ oder in Ergänzung kann er (bezüglich seiner Hauptachse) auch in einem anderen Winkel zu diesem angeordnet sein.

Beide Dosennebenkörper sind sowohl in Längsrichtung (x-Richtung) als auch in Querrichtung (y-Richtung) im Wesentlichen rechteckig ausgestaltet und weisen flache Seitenwände 5 und flache Rückwände 6 auf, welche über abgerundete Eckbereiche 7 einander übergehen und je einen zweiten Installationsraum 12 umschliessen. Die Dosennebenkörper 3 sind am Dosenhauptkörper 2 gegenüber voneinander angebracht, so dass die Hauptachsen 17 der beiden Dosennebenkörper 3 im Wesentlichen parallel sind. Jedoch sind andere Ausgestaltungen von einem oder beiden Dosennebenkörpern mit anderen Querschnitten und Positionen an dem Dosenhauptkörper 2, bzw. Positionen der Hauptachsen der Dosennebenkörper 3 möglich. Z.B. kann einer oder beide der Dosennebenkörper 3 eine Geometrie wie in der Ausführungsform gemäss **Figur 25** beschrieben aufweisen.

**Figur 27** zeigt eine weitere Ausführungsform einer Installationsdose 1 mit einem Dosenhauptkörper 2 und zwei Dosennebenkörpern 3, 35 in perspektivischen Darstellung von schräg oben und vorne. In diesem Beispiel ist lediglich ein Dosennebenkörper 3 aus dem weicheren Material gefertigt und somit in den ersten Installationsraum 11 des Dosenhauptkörpers 2 umstülpbar, während der zweite Dosennebenkörper 35 ganz oder zumindest teilweise aus starren Kunststoff geformt ist und nicht umstülpbar ausgelegt ist. Um die Installationsdose 1 dennoch in eine verhältnismässig kleine Öffnung in einer Hohlwand oder -decke versenkt montieren zu können, ist ein Bereich der Aussenwand des im Wesentlichen zylindrisch geformten Dosenhauptkörpers 2 im gegenüberliegenden Bereich von dem nicht umstülpbaren Dosennebenkörper 35 zum Boden 10 des Dosenhauptkörpers 2 stärker abgerundet. Die Kontur der Installationsdose 1 bei eingestülptem ersten Dosennebenkörper 3 ist in der Seitenansicht der Installationsdose in **Figur 28** mit einer gepunkteten Konturlinie 36 schematisch dargestellt. Wenn der deformierbare erste Dosennebenkörper 3 derart in den Dosenhauptkörper 1 hineingestülpt ist, lässt sich die Installationsdose 1 mit dem zweiten nicht umstülpbaren Dosennebenkörper 35 zuerst in die Öffnung in die Wand einstecken. Durch die Abrundung 36 des Dosenhauptkörpers 2 kann dieser dann schräg eingebracht und anschliessend in seine endgültige Position eingeschwenkt werden, mit der Hauptachse 16 des Dosenhauptkörpers 2 senkrecht zur Hohlwand (nicht näher dargestellt). Für die weitere Montage kann der deformierbare Dosennebenkörper 3 dann wieder herausgestülpt werden. Der somit gewonnene zusätzliche Platz kann unter anderen für zusätzliche Elektroinstallationen und/oder das Einbringen von Antennen genutzt werden.

**Liste der Bezugszeichen**

| | | | |
|---|---|---|---|
| 1 | Installationsdose | 15 | Membran (Öffnungen für Kabel) |
| 2 | Dosenhauptkörper | | |
| 3 | Dosennebenkörper | 16 | Hauptachse (Dosenhauptkörper) |
| 4 | Deformation (Linie) | | |
| 5 | Seitenwand (Dosennebenkörper) | 17 | Hauptachse (Dosennebenkörper) |
| 6 | Rückwand (Dosennebenkörper) | 18 | Schnapphacken |
| | | 19 | Schnappöffnungen |
| 7 | Eckbereich (Dosennebenkörper) | 20 | Schnappvorgang (Linie) |
| | | 21 | Rahmen (Dosennebenkörper) |
| 8 | Aussenwand (Dosenhauptkörper) | | |
| | | 22 | Wand |
| 9 | Öffnung (Dosenhauptkörper) | 23 | Loch (für Installationsdose) |
| | | 24 | Anschlag / Rand |
| 10 | Boden (Dosenhauptkörper) | 25 | Dichtung |
| 11 | Erster Installationsraum (Dosenhauptkörper) | 26 | Lasche |
| | | 27 | Nische |
| 12 | Zweiter Installationsraum (Dosennebenkörper) | 28 | Befestigungsbügel |
| | | 29 | Schraube |
| 13 | Wandbereich (Dosenhauptkörper) | 30 | Adapter |
| | | 31 | Schraubenloch |
| 14 | Öffnungen (für Kabel, bzw. Kabelrohre) | 32 | Stützflügel |
| | | 33 | Einfache Installationsdose |
| 34 | Verbindungsrohr | 36 | Abrundungskontur des Dosenhauptkörpers |
| 35 | Nicht einstülpbarer Dosennebenkörper | | |
| | | 37 | Verbindungsbuchse (Rohreinführung) |

## Patentansprüche

1. Installationsdose (1) mit
a. einem Dosenhauptkörper (2), welcher einen über eine Öffnung (9), die einem Dosenboden (10) gegenüberliegend angeordnet ist, zugänglichen ersten Installationsraum (11) umgibt, und
b. einem von diesem seitlich abstehenden Dosennebenkörper (3), welcher im montierten Zustand der Installationsdose (1) einen seitlich abstehenden zweiten Installationsraum (12) umgibt, wobei
c. der Dosennebenkörper (3) deformierbar ausgestaltet ist, derart, dass er ins Innere des ersten Installationsraumes (11) des Dosenhauptkörpers (2) umstülpbar ist,
d. wobei der Dosennebenkörper (3) zumindest bereichsweise aus weichelastischem Kunststoff hergestellt ist, und
e. wobei der Dosennebenkörper (3) zumindest eine eigenstabile Position aufweist, so dass im montierten Zustand der Installationsdose (1) diese weitgehend dimensionsstabil ist und der Dosennebenkörper (3) zur Aufnahme und Halterung eines Gerätes oder einer Komponente dienen kann.

2. Installationsdose (1) gemäss Anspruch 1, **dadurch gekennzeichnet, dass** der Dosennebenkörper (3) zumindest einen Bereich aus starrem Kunststoff aufweist.

3. Installationsdose (1) gemäss einem der vorangehenden Patentansprüche, **dadurch gekennzeichnet, dass** der Dosenhauptkörper (2) und der Dosennebenkörper (3) als separate Teile ausgestaltet sind welche trennbar und/oder untrennbar miteinander wirkverbunden sind.

4. Installationsdose (1) gemäss Patentanspruch 3, **dadurch gekennzeichnet, dass** der Dosenhauptkörper (2) und der Dosennebenkörper (3) über eine Schnappverbindung wirkverbunden sind.

5. Installationsdose (1) gemäss einem der vorangehenden Patentansprüche, **dadurch gekennzeichnet, dass** der Dosenhauptkörper (2) zumindest bereichsweise aus einem starren Kunststoff besteht.

6. Installationsdose (1) gemäss den Patentanspruch 3, **dadurch gekennzeichnet, dass** der Dosenhauptkörper (2) aus flexiblem Kunststoff besteht und ein Gerüst aus starrem Kunststoff aufweist.

7. Installationsdose (1) gemäss einem der vorangehenden Patentansprüche, **dadurch gekennzeichnet, dass** der Dosenhauptkörper (2) zumindest eine Öffnung (14) aufweist, welche durch eine heraustrennbare Membran (15) aus weichelastischem Kunststoff verschlossen ist.

8. Installationsdose (1) gemäss Patentanspruch 7, **dadurch gekennzeichnet, dass** die zumindest eine Öffnung (14) eine Rohreinführung ist.

9. Installationsdose (1) gemäss einem der vorangehenden Patentansprüche, **dadurch gekennzeichnet, dass** der Dosenhauptkörper (2) Befestigungsmittel zur Befestigung der Installationsdose (1) an einer Wand aufweist.

10. Installationsdose (1) gemäss einem der vorangehenden Patentansprüche, **dadurch gekennzeichnet, dass** die Installationsdose (1) mindestens ein Wirkverbindungsmittel aufweist mittels dem sie mit einer weiteren Installationsdose (1) wirkverbunden werden kann.

11. Installationsdose (1) gemäss Patentanspruch 10, **dadurch gekennzeichnet, dass** das Wirkverbindungsmittel eine Verbindungsbuchse (37) ist, welche zum Wirkverbinden von zwei Installationsdosen (1, 33) über ein Verbindungsrohr (34) dient.

12. Installationsdose (1) gemäss Patentanspruch 11, **dadurch gekennzeichnet, dass** die Verbindungsbuchse (37) bezüglich der Hauptachse (17) des Dosennebenkörpers (3) versetzt und/oder in einem Winkel von +/- 90° angeordnet ist.

13. Installationsdose (1) gemäss einem der vorangehenden Patentansprüche, **dadurch gekennzeichnet, dass** die Installationsdose (1) einen zweiten Dosennebenkörper (3, 35) aufweist, wobei der zweite, bezüglich dem Dosenhauptkörper (2), gegenüber dem ersten Dosennebenkörper (3, 35) angeordnet ist oder in einem anderen Winkel zu diesem angeordnet ist.

14. Installationsdose (1) gemäss Patentanspruch 13, **dadurch gekennzeichnet, dass** nur einer der beiden Dosennebenkörper (3, 35) umstülpbar ausgestaltet ist.

## Claims

1. Installation box (1) comprising
a. a box main body (2) which surrounds a first installation space (11) accessible via an opening (9) arranged opposite a box base (10), and
b. a box auxiliary body (3) which protrudes laterally from the said box main body and which, in the fitted state of the installation box (1), surrounds a laterally protruding second installation space (4), wherein
c. the box auxiliary body (3) is formed to be deformable such that it can be turned inside out into the interior of the first installation space (11) of the box main body (2),
d. wherein the box auxiliary body (3) is at least in part produced from soft-elastic plastic, and
e. wherein the box auxiliary body (3) has at least one self-stable position, so that, in the fitted state of the installation box (1), said installation box is largely dimensionally stable and the box auxiliary body (3) can serve to receive and hold a device or a component.

2. Installation box (1) according to claim 1, **characterized in that** the box auxiliary body (3) comprises at least one part composed of rigid plastic.

3. Installation box (1) according to one of the preceding claims, **characterized in that** the box main body (2) and the box auxiliary body (3) are formed as separate parts which are detachably and/or non-detachably interconnected to one another.

4. Installation box (1) according to Claim 3, **characterized in that** the box main body (2) and the box auxiliary body (3) are interconnected by a snap coupling.

5. Installation box (1) according to one of the preceding claims, **characterized in that** the box main body (2) at least in part consists of a rigid plastic.

6. Installation box (1) according to Claim 3, **characterized in that** the box main body (2) consists of flexible plastic and comprises a frame composed of rigid plastic.

7. Installation box (1) according to one of the preceding claims, **characterized in that** the box main body (2) comprises at least one opening (14) which is closed by a removable membrane (15) composed of soft-elastic plastic.

8. Installation box (1) according to Claim 7, **characterized in that** the at least one opening (14) is a pipe inlet.

9. Installation box (1) according to one of the preceding claims, **characterized in that** the box main body (2) comprises fastening means for fastening the installation box (1) to a wall.

10. Installation box (1) according to one of the preceding claims, **characterized in that** the installation box (1) comprises at least one interconnecting means by which it can be interconnected to a further installation box (1).

11. Installation box (1) according to Claim 10, **characterized in that** the interconnecting means is a connecting socket (37) which serves to interconnect two installation boxes (1, 33) by means of a connecting pipe (34).

12. Installation box (1) according to Claim 11, **characterized in that** the connecting socket (37) is arranged offset and/or at an angle of +/-90° with respect to the main axis (17) of the box auxiliary body (3).

13. Installation box (1) according to one of the preceding claims, **characterized in that** the installation box (1) comprises a second box auxiliary body (3, 35), wherein the second box auxiliary body is, with respect to the box main body (2), arranged opposite the first box auxiliary body (3, 35) or is arranged at a different angle to it.

14. Installation box (1) according to Claim 13, **characterized in that** only one of the two box auxiliary bodies (3, 35) is formed to be deformable inside out.

## Revendications

1. Boîte d'installation (1) comprenant
a. un corps de boîte principal (2) qui entoure un premier espace d'installation (11) accessible par une ouverture (9) qui est disposée en regard d'un fond de boîte (10), et
b. un corps de boîte secondaire (3) qui s'étend latéralement à partir dudit premier espace d'installation et qui entoure, lorsque la boîte d'installation (1) est montée, un deuxième espace d'installation (12) qui s'étend latéralement,
c. le corps de boîte secondaire (3) étant conçu pour être déformable de sorte qu'il peut être retourné vers l'intérieur du premier espace d'installation (11) du corps principal de boîte (2),
d. le corps de boîte latéral (3) étant au moins en partie en matière synthétique élastique souple, et
e. le corps de boîte secondaire (3) ayant au moins une position autostable de sorte que, lorsque la boîte d'installation (1) est montée, celle-ci soit dans une large mesure dimensionnellement stable et que le corps de boîte secondaire (3) puisse servir à recevoir et supporter un dispositif ou un composant.

2. Boîte d'installation (1) selon la revendication 1, **caractérisée en ce que** le corps de boîte secondaire (3) comporte au moins une partie en matière synthétique rigide.

3. Boîte d'installation (1) selon l'une des revendications précédentes, **caractérisée en ce que** le corps de boîte principal (2) et le corps de boîte secondaire (3) sont conçus comme pièces séparées qui sont reliées l'une à l'autre de manière séparable et/ou inséparable.

4. Boîte d'installation (1) selon la revendication 3, **caractérisée en ce que** le corps de boîte principal (2) et le corps de boîte secondaire (3) sont reliés par encliquetage.

5. Boîte d'installation (1) selon l'une des revendications précédentes, **caractérisée en ce que** le corps de boîte principal (2) est au moins en partie en matière synthétique rigide.

6. Boîte d'installation (1) selon la revendication 3, **caractérisée en ce que** le corps de boîte principal (2) est composé de matière synthétique souple et comporte un cadre en matière synthétique rigide.

7. Boîte d'installation (1) selon l'une des revendications précédentes, **caractérisée en ce que** le corps de boîte principal (2) comporte au moins une ouverture (14) qui est fermée par une membrane détachable (15) en matière synthétique élastique souple.

8. Boîte d'installation (1) selon la revendication 7, **caractérisée en ce que** l'au moins une ouverture (14) est une entrée de tube.

9. Boîte d'installation (1) selon l'une des revendications précédentes, **caractérisée en ce que** le corps de boîte principal (2) comporte des moyens de fixation destinés à fixer la boîte d'installation (1) à une paroi.

10. Boîte d'installation (1) selon l'une des revendications précédentes, **caractérisée en ce que** la boîte d'installation (1) comporte au moins un moyen de liaison permettant de relier ladite boîte d'installation à une autre boîte d'installation (1).

11. Boîte d'installation (1) selon la revendication 10, **caractérisée en ce que** le moyen de liaison est une douille de liaison (37) qui sert à relier deux boîtes d'installation (1, 33) par un tube de liaison (34).

12. Boîte d'installation (1) selon la revendication 11, **caractérisée en ce que** la douille de liaison (37) est décalée par rapport à l'axe principal (17) du corps de boîte secondaire (3) et/ou est disposée suivant un angle de +/-90°.

13. Boîte d'installation (1) selon l'une des revendications précédentes, **caractérisée en ce que** la boîte d'installation (1) comporte un deuxième corps de boîte secondaire (3, 35), ledit corps de boîte secondaire étant disposé, par rapport au corps de boîte principal (2), en regard du premier corps de boîte secondaire (3, 35) ou suivant un angle différent par rapport à celui-ci.

14. Boîte d'installation (1) selon la revendication 13, **caractérisée en ce qu'**un seul des deux corps de boîte secondaire (3, 35) est conçu de manière à être retournable.
